# EUROPEAN PATENT APPLICATION

(11) **EP 4 836 233 A1**
(43) Date of publication of application: **04.11.2026**
(21) Application number: 26165411.5
(22) Date of filing: 17.03.2026
(51) Int. Cl.: H02J 13/12, G06N 7/01, H02J 3/0012

(54) **METHOD FOR HYBRID STATE ESTIMATION OF A POWER TRANSMISSION NETWORK**

(30) Priority: 30.04.2025 IN 202521041716
(71) Applicant: Tata Consultancy Services Limited, Maharashtra (IN)
(72) Inventor: RAVI KUMAR, Bandi, 411057 Pune, Maharashtra (IN); RAJAGOPAL, Narayanan, 560066 Bangalore, Karnataka (IN); SARANGAN, Venkatesh, 600096 Chennai, Tamil Nadu (IN); FERNANDO, Savarirajan, 600096 Chennai, Tamil Nadu (IN); RAJU, Badugu Mahesh, 400076 Bombay, Maharashtra (IN); SOMAN, Shreevardhan, 400076 Bombay, Maharashtra (IN)
(74) Representative: Goddar, Heinz J.

(57) **Abstract**

This disclosure relates generally to a method for hybrid state estimation of a power transmission network using Gaussian Process Regression based forecasting and a modified Weighted Least Square approach. Most of the conventional approaches do not model time lags between the RTU measurements and the PMU measurements. The present disclosure forecasts the RTU measurements in real-time with associated noise and uncertainties using Gaussian Process Regression (GPR) based forecasting. The method also constructs an adaptive weight matrix based on the noise and uncertainties associated with the RTU measurements and the PMU measurements to compensate for the time lag and perform hybrid state estimation using a modified weighted least square (WLS) approach. By leveraging the RTU measurements and the PMU measurements through a consistent and uncertainty-aware framework, the present disclosure achieves significantly improved hybrid state estimation accuracy and robustness in real-world, time-staggered measurement environments.

## Description

### CROSS-REFERENCE TO RELATED APPLICATIONS AND PRIORITY

The present application claims priority from Indian patent application no. 202521041716, filed on April 30, 2025.

### TECHNICAL FIELD

The disclosure herein generally relates to power transmission networks, and, more particularly, to a method for hybrid state estimation of a power transmission network.

### BACKGROUND

Power system monitoring and control (PSMC) plays an important role in the stable, efficient and reliable operation of power grids or power transmission networks. State estimation is a crucial aspect of the PSMC that utilizes the available measurements. Traditionally, measurements from remote terminal units (RTUs) present in supervisory control and data acquisition (SCADA) infrastructure were used for state estimation. With the advent of phasor measurement units (PMUs) that give high fidelity sensing of power transmission dynamics, state estimation techniques were enhanced to make use of measurements from the PMUs. The high cost of the PMUs, and the unavailability of PMUs at all buses motivates the need for hybrid state estimation which uses both RTU measurements and PMU measurements. However, the different reporting rates of the PMUs and the RTUs devices and the time lags between the PMU measurements and the RTU measurements pose a challenge for state estimation.

Existing approaches to hybrid state estimation commonly address the time-lag between RTU and PMU measurements by naively using the most recent RTU data for subsequent PMU measurements or by employing basic adaptive weighting strategies based solely on time differences. While these techniques offer some improvement, they largely assume a linear evolution of the power system state and do not account for complex, non-linear dynamics or the uncertainties associated with forecasted RTU data. Consequently, state estimates produced using these methods are susceptible to inaccuracies, particularly under dynamic system conditions.

Furthermore, current methods typically overlook the uncertainty associated with the forecasted measurements themselves when assigning adaptive weights. Traditional systems apply static weighting factors without dynamically incorporating the measurement noise and forecast uncertainty, leading to suboptimal utilization of available information. Moreover, the iterative update mechanism used in conventional weighted least squares (WLS) approaches does not efficiently adapt to forecast-enhanced hybrid measurements, resulting in slower convergence and occasional instability.

### SUMMARY

Embodiments of the present disclosure present technological improvements as solutions to one or more of the above-mentioned technical problems recognized by the inventors in conventional systems. For example, in one embodiment, a method for hybrid state estimation of a power transmission network is provided. The system includes a memory storing instructions; one or more Input/Output (I/O) interfaces; and one or more hardware processors coupled to the memory via the one or more I/O interfaces, wherein the one or more hardware processors are configured by the instructions to receive a plurality of historical remote terminal unit (RTU) data at a first time instant *t_{R}* and a plurality of real-time phasor measurement unit (PMU) measurements at a second time instant *t_{P},* wherein *t_{P} > t_{R}.* Further, the system is configured to forecast a plurality of real-time RTU measurements *ẑ_{RTU}* at the second time instant *t_{P}* from the plurality of historical RTU data using Gaussian Process Regression (GPR) technique. Gaussian process regression is a non-parametric Bayesian approach that can be used for a variety of purposes - estimation, filtering, and forecasting. Now, a plurality of RTU noise variances ${σ}_{rtu}^{2}$ and a plurality of RTU uncertainty variances ${σ}_{est}^{2}$ corresponding to the plurality of real-time RTU measurements are obtained at the second time instant *t_{P}* using GPR technique based on the plurality of historical RTU data. Further, the system is configured to compute a first set of adaptive weights for the plurality of real-time RTU measurements *wᵣₜᵤ* based on a function of the plurality of uncertainty variances ${σ}_{est}^{2}$ and the plurality of noise variance ${σ}_{rtu}^{2}$ to generate a plurality of weighted RTU measurements. Further, a second set of weights for the plurality of real-time PMU measurements *wₚₘᵤ* is calculated based on a plurality of PMU noise variance ${σ}_{pmu}^{2}$ to generate a plurality of weighted PMU measurements.

The first set of adaptive weights and the second set of weights assigned to the plurality of real-time RTU measurements and the plurality of real-time PMU measurement leads to providing a high weightage to more accurate measurement values (RTU and PMU) and consequently, a low weightage is assigned to low accuracy measurement (RTU and PMU) values. Further, the system obtains a hybrid measurement vector *zₘₑₐₛ* by combining the plurality of weighted RTU measurements *ẑ_{RTU}* and the weighted PMU measurements *z_{PMU}.* The hybrid measurement vector consisting of both the plurality of real-time PMU measurement and the plurality of real-time RTU measurements combined in a time synchronized manner, is expressed in terms of true system state. The true system state refers to actual voltage magnitudes and phase angles of the buses. Later, the system iteratively estimates an initial state estimate of the power transmission network using the hybrid measurement vector by minimizing a weighted least squares (WLS) objective function. WLS is a standard optimization technique where weighted sum of squared measurements residuals are minimized to estimate the state of a system. A unified weight matrix W is a diagonal matrix comprising the first set of adaptive weights *wᵣₜᵤ* and the second set of adaptive weights *wₚₘᵤ.* The first set of adaptive weights and the second set of adaptive weights provide weightage to significantly accurate measurements for improving the efficiency of state estimation. Further, the system is configured to compute an updated state vector Δ*v^{k}* at iteration k, using the initial state estimate, wherein the iteration when the absolute value of the state vector change ∥Δ*v^{k}*∥ falls below the predetermined convergence threshold. The updated state vector is estimated using a Jacobian Matrix *J* and Δ*zₘₑₐₛ* ,the difference between the hybrid measurement vector and function *f*(*v^{k}*)*.* The Jacobian matrix *J* is computed by evaluating partial derivatives of the non-linear measurement function *f*(*v*) with respect to a real part and an imaginary part of the state vector *v* . Finally, the system is configured to generate a hybrid state estimate vector *v*^{*k*+1} from the updated state vector Δ*v^{k}.* The hybrid state estimate vector obtained from the Gaussian process regression-based technique that not only supports non-linear system state evolutions but also allows us to track the expected changes in the RTU (SCADA) measurement.

In another aspect, a method for hybrid state estimation of a power transmission network is provided. The method includes receiving a plurality of historical remote terminal unit (RTU) data at a first time instant *t_{R}* and a plurality of real-time phasor measurement unit (PMU) measurements at a second time instant *t_{P}*, wherein *t_{P} > t_{R}.* Further, the method includes forecasting a plurality of real-time RTU measurements *ẑ_{RTU}* at the second time instant *t_{P}* from the plurality of historical RTU data using Gaussian Process Regression (GPR) technique. Gaussian process regression is a non-parametric Bayesian approach that can be used for a variety of purposes - estimation, filtering, and forecasting. Now, a plurality of RTU noise variances ${σ}_{rtu}^{2}$ and a plurality of RTU uncertainty variances ${σ}_{est}^{2}$ corresponding to the plurality of real-time RTU measurements are obtained at the second time instant *t_{P}* using GPR technique based on the plurality of historical RTU data. Further, the method includes computing a first set of adaptive weights for the plurality of real-time RTU measurements *wᵣₜᵤ* based on a function of the plurality of uncertainty variances ${σ}_{est}^{2}$ and the plurality of noise variance ${σ}_{rtu}^{2}$ to generate a plurality of weighted RTU measurements. Further, a second set of weights for the plurality of real-time PMU measurements *wₚₘᵤ* is calculated based on a plurality of PMU noise variance ${σ}_{pmu}^{2}$ to generate a plurality of weighted PMU measurements.

The first set of weights and the second set of weights assigned to the plurality of real-time RTU measurements and the plurality of real-time PMU measurement leads to providing a high weightage to more accurate measurement values (RTU and PMU) and consequently, a low weightage is assigned to low accuracy measurement (RTU and PMU) values. Further, the method obtains a hybrid measurement vector *zₘₑₐₛ* by combining the plurality of weighted RTU measurements *ẑ_{RTU}* and the plurality of weighted PMU measurements *z_{PMU}.* The hybrid measurement vector consisting of both the plurality of real-time PMU measurements and the plurality of real-time RTU measurements combined in a time synchronized manner, is expressed in terms of true system state. The true system state refers to actual voltage magnitudes and phase angles of the buses. Later, the method includes iteratively estimating an initial state estimate of the power transmission network using the hybrid measurement vector by minimizing a weighted least squares (WLS) objective function. WLS is a standard optimization technique where weighted sum of squared measurements residuals are minimized to estimate the state of a system. A unified weight matrix *W* is a diagonal matrix comprising the first set of adaptive weights *wᵣₜᵤ* and the second set of adaptive weights *wₚₘᵤ.* The first set of adaptive weights and the second set of adaptive weights provide weightage to significantly accurate measurements for improving the efficiency of state estimation. Further, the method includes computing an updated state vector Δ*v^{k}* at iteration k, using the initial state estimate, wherein the iteration when the absolute value of the state vector change ∥Δ*v^{k}*∥ falls below the predetermined convergence threshold. The updated state vector is estimated using a Jacobian Matrix *J* and Δ*zₘₑₐₛ* ,the difference between the hybrid measurement vector and function *f*(*v^{k}*)*.* The Jacobian matrix *J* is computed by evaluating partial derivatives of the non-linear measurement function *f*(*v*) with respect to a real part and an imaginary part of the state vector *v* . Finally, the method includes generating a hybrid state estimate vector *v*^{*k+*1} from the updated state vector Δ*v^{k}.* The hybrid state estimate vector obtained from the Gaussian process regression-based technique that not only supports non-linear system state evolutions but also allows us to track the expected changes in the RTU (SCADA) measurement.

In yet another aspect, a non-transitory computer readable medium for a method for hybrid state estimation of a power transmission network is provided. The method includes receiving a plurality of historical remote terminal unit (RTU) data at a first time instant *t_{R}* and a plurality of real-time phasor measurement unit (PMU) measurements at a second time instant *t_{P},* wherein *t_{P} > t_{R}.* Further, the method includes forecasting a plurality of real-time RTU measurements *ẑ_{RTU}* at the second time instant *t_{P}* from the plurality of historical RTU data using Gaussian Process Regression (GPR) technique. Gaussian process regression is a non-parametric Bayesian approach that can be used for a variety of purposes - estimation, filtering, and forecasting. Now, a plurality of RTU noise variances ${σ}_{rtu}^{2}$ and a plurality of RTU uncertainty variances ${σ}_{est}^{2}$ corresponding to the plurality of real-time RTU measurements are obtained at the second time instant *t_{P}* using GPR technique based on the plurality of historical RTU data. Further, the method includes computing a first set of adaptive weights for the plurality of real-time RTU measurements *wᵣₜᵤ* based on a function of the plurality of uncertainty variances ${σ}_{est}^{2}$ and the plurality of noise variance ${σ}_{rtu}^{2}$ to generate a plurality of weighted RTU measurements. Further, a second set of weights for the plurality of real-time PMU measurements *wₚₘᵤ* is calculated based on a plurality of PMU noise variance ${σ}_{pmu}^{2}$ to generate a plurality of weighted PMU measurements.

The first set of adaptive weights and the second set of adaptive weights assigned to the plurality of real-time RTU measurements and the plurality of real-time PMU measurements leads to providing a high weightage to more accurate measurement values (RTU and PMU) and consequently, a low weightage is assigned to low accuracy measurement (RTU and PMU) values. Further, the method obtains a hybrid measurement vector *zₘₑₐₛ* by combining the plurality of weighted RTU measurements *ẑ_{RTU}* and the plurality of weighted PMU measurements *z_{PMU}.* The hybrid measurement vector consisting of both the plurality of real-time PMU measurement and the plurality of real-time RTU measurements combined in a time synchronized manner, is expressed in terms of true system state. The true system state refers to actual voltage magnitudes and phase angles of the buses. Later, the method includes iteratively estimating an initial state estimate of the power transmission network using the hybrid measurement vector by minimizing a weighted least squares (WLS) objective function. WLS is a standard optimization technique where weighted sum of squared measurements residuals are minimized to estimate the state of a system. A unified weight matrix *W* is a diagonal matrix comprising the first set of adaptive weights *wᵣₜᵤ* and the second set of adaptive weights *wₚₘᵤ.* The first set of adaptive weights and the second set of adaptive weights provide weightage to significantly accurate measurements for improving the efficiency of state estimation. Further, the method includes computing an updated state vector Δ*v^{k}* at iteration k, using the initial state estimate, wherein the iteration when the absolute value of the state vector change ∥Δ*v^{k}*∥ falls below the predetermined convergence threshold. The updated state vector is estimated using a Jacobian Matrix *J* and Δ*zₘₑₐₛ* ,the difference between the hybrid measurement vector and function *f*(*v^{k}*). The Jacobian matrix *J* is computed by evaluating partial derivatives of the non-linear measurement function *f*(*v*) with respect to a real part and an imaginary part of the state vector *v.* Finally, the method includes generating a hybrid state estimate vector *v*^{*k+*1} from the updated state vector Δ*v^{k}.* The hybrid state estimate vector obtained from the Gaussian process regression-based technique that not only supports non-linear system state evolutions but also allows us to track the expected changes in the RTU (SCADA) measurement.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for hybrid state estimation of a power transmission network, in accordance with some embodiments of the present disclosure.
FIG. 2 depicts an exemplary flow chart illustrating a method for hybrid state estimation of a power transmission network, in accordance with some embodiments of the present disclosure.
FIG. 3 illustrates remote terminal units (RTU) measurements and phasor measurement units (PMU) measurements with different reporting rates, in accordance with some embodiments of the present disclosure.
FIG. 4 depicts a box plot comparison of the method for hybrid state estimation of a power transmission network with respect to a method M2 and a method M3 for minimum and maximum lags, in accordance with some embodiments of the present disclosure.
FIG. 5 illustrates a box plot comparison of the method for hybrid state estimation of a power transmission network with respect to the method M2 for noise level of 3%, in accordance with some embodiments of the present disclosure.
FIG. 6 illustrates a box plot comparison of the method for hybrid state estimation of a power transmission network with respect to the method M3 for noise level of 3%, in accordance with some embodiments of the present disclosure.
FIG. 7 illustrates a box plot comparison of the method for hybrid state estimation of a power transmission network with respect to the method M2 and the method M3 for different noise levels, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

### GLOSSARY:

The term 'Power system' refers to a network that generates, transmits, distributes, and consumes electricity using electrical components and devices.

The term 'Bus voltage' or 'state' refers to voltage magnitude and phase angle of the electrical node/substation in a power network.

The term 'State Estimation (SE)' refers to a process that estimates the voltage magnitudes and angles at all buses in a power system using available measurements and a mathematical model.

The term 'Hybrid State Estimation (HSE)' refers to a state estimation method that combines PMU (phasor measurement unit) measurements and RTU (remote terminal unit) measurements to improve accuracy and observability.

The term 'Phasor Measurement Unit (PMU)' refers to a device that provides synchronized voltage and current phasor measurements using GPS timestamps, typically offering high accuracy and fast update rates.

The term 'Remote Terminal Unit (RTU)' refers to a device that provides conventional SCADA measurements like voltage magnitudes, power flows, and injections, usually updated every few seconds and not synchronized.

The term 'Weighted Least Square (WLS)' refers to a common optimization technique in SE that minimizes the weighted sum of squared measurement residuals to estimate the system state.

The term 'Jacobian Matrix (J)' refers to a matrix representing the partial derivatives of measurements with respect to the system states.

In a power system, any electrical parameter is possible to be estimated if all the associated bus voltages in the power system are identified. Thereby, the power system state/behavior is visualized. Thus, the bus voltage phasors are also called as states and the process of estimation of these states is named as state estimation. State estimation uses measurements from meters like RTUs. These measurements have noise and are erroneous. State estimation processes this noisy raw measurement data to find the true states of the system. It handles the erroneous data using a mathematical approach called weighted least squares (WLS) to obtain the states. It is used in several critical applications such as contingency analysis, stability analysis, and optimal power flow. In addition, state estimator can also be used in control applications such as demand response and voltage regulation. Thus, state estimators have become a mandatory tool for a power system.

Conventionally, RTU measurements have been used for state estimator. While the RTU measurements are widely used, the measurements from RTUs often have inaccuracies, potential delays and lack of real-time data which leads to compromises in effectiveness of state estimation techniques. Later, the PMUs and relatively accurate PMU measurements have been a great addition to the state estimator. Also, the high reporting rate of PMUs measurements are able to capture the real-time dynamics of the power transmission network. However, due to non-availability of PMUs at all buses of the power transmission network because of the high cost, state estimator should utilize both RTU and PMU measurements. Thus forms a hybrid state estimator (HSE).

The present disclosure provides a Gaussian process regression (GPR) based approach to synchronize the RTU measurements with the PMU measurements and generating a hybrid measurement vector using the RTU measurements and the PMU measurements post synchronization. Power system states are phasors with magnitude and phase angle. Therefore, state estimation can be done in either rectangular form or polar coordinates. In polar form, the first order derivatives of the PMU measurement (current) with respect to angles leads to NAN values which in turn makes Jacobian matrix '*J*' ill-conditioned. The Jacobian matrix '*J*' indicates the relations between the measurements and bus voltages/states. If '*J*' matrix consists of NAN values, then WLS algorithm cannot solve the state estimation problem and estimation algorithm fails.

In the present disclosure, the hybrid state estimation is done using rectangular coordinates since the rectangular coordinates is able to obtain linear state equations for the PMU measurements.

The embodiments of present disclosure herein addresses unresolved problem of hybrid state estimation in a power transmission network. Almost all of the conventional approaches do not model time lags between the RTU measurements and the PMU measurements. However, some of the existing approaches attempt addressing the challenge of the time lags using adaptive weighting based on a set of assumptions including linearized evolution of the state estimate and the RTU measurements does not change across different time instants. Thus, in the present disclosure, the method forecasts the RTU measurements in real-time with associated noise and uncertainties using Gaussian Process Regression (GPR) based forecasting. The method also constructs an adaptive weight matrix based on the noise and uncertainties associated with the RTU measurements and the PMU measurements , and perform hybrid state estimation using a modified weighted least square (WLS) approach. By leveraging the RTU measurements forecasted and the PMU measurements through a consistent and uncertainty-aware framework, the present disclosure achieves significantly improved hybrid state estimation accuracy and robustness in real-world, time-staggered measurement environments.

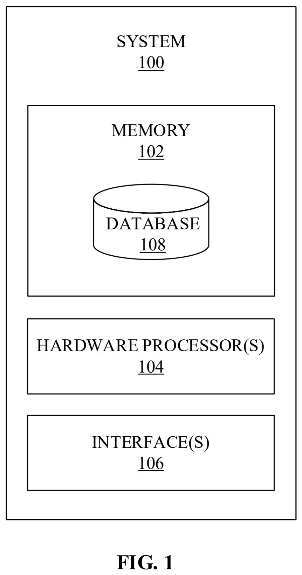

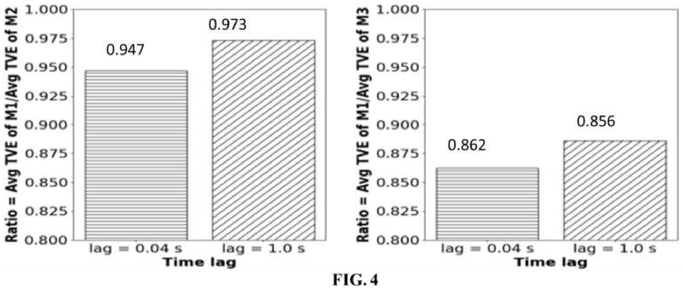

Referring now to the drawings, and more particularly to FIG. 1 through FIG. 7, where similar reference characters denote corresponding features consistently throughout the figures, there are shown preferred embodiments and these embodiments are described in the context of the following exemplary system and/or method.

FIG. 1 depicts an exemplary system 100 for predicting immunogenic epitopes from antigen protein sequences, in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information a plurality of antigen protein sequences. The database 108 further comprises features extracted from the plurality of antigen protein sequences which are then transformed to a learned hidden representation, and the like. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

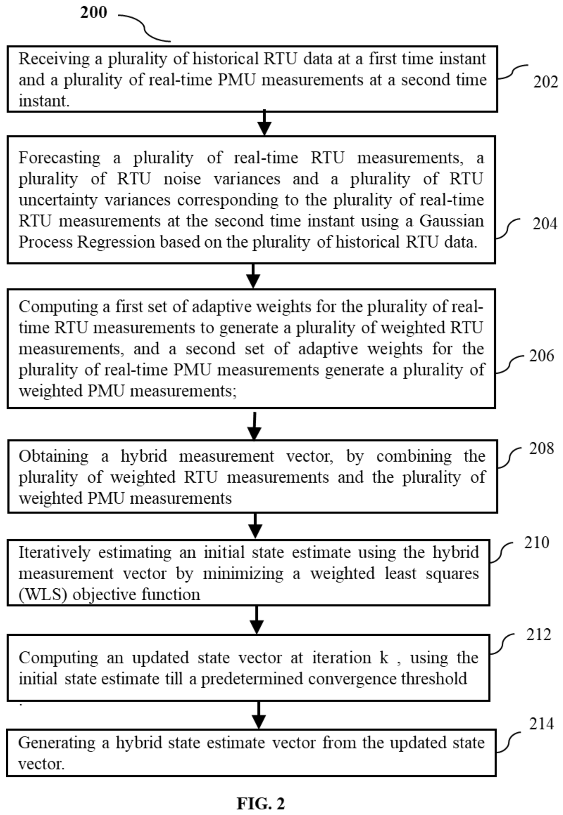

FIG. 2 with reference to FIG. 1 depicts an exemplary flow chart illustrating a method for hybrid state estimation of a power transmission network using the system 100 of FIG. 1 in accordance with an embodiment of the present disclosure. The system 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 202 of the method of the present disclosure, the one or more hardware processors 104 receive a plurality of historical remote terminal unit (RTU) data at a first time instant *t_{R}* and a plurality of real-time phasor measurement unit (PMU) measurements at a second time instant *t_{P},* wherein *t_{P} > t_{R}.* As mentioned earlier, power transmission networks in the real world have a mixture of measurements from both PMU devices and RTU devices . In order to estimate overall network state of the power transmission network from the RTU measurements and the PMU measurements, an important challenge has to be overcome is that of mis-match in timestamps between the PMU measurements and the RTU measurements.

Consider a power transmission network with 'N' number of buses. Each bus voltage consists of two states, one for real part and other for imaginary part of the bus voltage phasor. Thus, here '2N' are the total number of states. Let *N_{PMU}* be number of buses associated with the PMU measurements and *N_{RTU}* be the number of buses associated with the RTU measurements, i.e, (*N - N_{PMU}*) in general . Each of the PMU device measures the bus voltage and an outgoing current phasor in rectangular form. Now, let *z_{PMU}* be a PMU measurement vector representing the PMU measurements across all the 'N' buses. Each RTU device measures a voltage magnitude, an outgoing active power and an outgoing reactive power at each bus. Let *z_{RTU}* be an RTU measurement vector representing the historical RTU measurements across all the buses.

At step 204 of the method of the present disclosure, the one or more hardware processors 104 are configured to forecast a plurality of real-time RTU measurements *ẑ_{RTU}* at the second time instant *t_{P}* from the plurality of historical RTU data using Gaussian Process Regression (GPR) technique. Gaussian process regression is a non-parametric Bayesian approach that can be used for a variety of purposes - estimation, filtering, and forecasting. Now at the same step a plurality of RTU noise variances ${σ}_{rtu}^{2}$ and a plurality of RTU uncertainty variances ${σ}_{est}^{2}$ corresponding to the plurality of real-time RTU measurements are obtained at the second time instant *t_{P}* using GPR technique based on the plurality of historical RTU data. Let ${σ}_{i , pmu}^{2}$*,* be variance of *ith* PMU measurement and ${σ}_{i , rtu}^{2}$ be the variance of *ith* RTU measurement where, variance-matrix, ${σ}^{2} = {\left[{σ}_{i , PMU}^{2} {σ}_{i , RTU}^{2}\right]}^{T}$ (1)

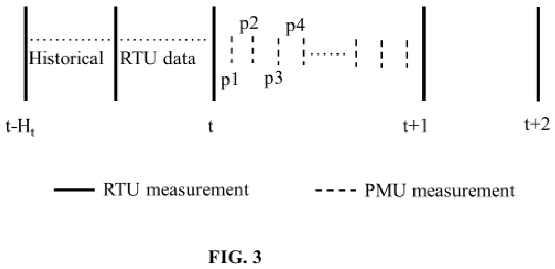

As depicted in FIG. 3 the reporting frequency of the PMU measurements are at a very high rate - as much as few tens to few hundred observations per second whereas the RTU measurements are reported at a slower rate i.e., from a few samples per second to a few samples per minute. Consequently, in the interval between two consecutive RTU measurements, several PMU measurements are received. To perform state estimation, the time lags between the RTU measurements and the PMU measurements have to be reconciled. The naive way to reconcile the time lags is to ignore the lag and use the last received RTU measurement at all subsequent PMU measurement instant. However, ignoring the time lag between the RTU measurements and the PMU measurements leads to inaccurate state estimation.

Another way to reconcile the time lags between the RTU measurements and the PMU measurements is adaptive weighting. In other words, to assign lower weights to RTU measurements that are further back in time. A few of the existing methods assign a weight that is inversely proportional to the square of the time difference or the time lag between the RTU measurements and the PMU measurements. The method of assigning weights inversely proportional to the time lag certainly improves the accuracy of the state estimation in comparison to the naive method. Nevertheless, the method considers that in a temporal locality, the state of the power transmission network evolves in a linear manner. Additionally, the method does not adjust the RTU measurements to account for any possible state evolution. Thus, the method of assigning weights inversely proportional to the time lag does not provide an efficient approach for state estimation.

At step 206 of the method of the present disclosure the one or more hardware processors 104 computes a first set of adaptive weights for the plurality of real-time RTU measurements *wᵣₜᵤ* based on a function of the plurality of uncertainty variances ${σ}_{est}^{2}$ and the plurality of noise variance ${σ}_{rtu}^{2}$*.* The first set of adaptive weights are calculated using the formula given as: ${w}_{rtu} = \frac{1}{{σ}_{rtu}^{2} + {σ}_{est}^{2}}$ (2)

Further, at the same step a second set of adaptive weights for the plurality of real-time PMU measurements *wₚₘᵤ* is calculated based on a plurality of PMU noise variance ${σ}_{pmu}^{2}$ by: ${w}_{pmu} = \frac{1}{{σ}_{pmu}^{2}}$ (3)

The first set of adaptive weights and the second set of adaptive weights assigned to the RTU measurements and the PMU measurement leads to providing a high weightage to more accurate measurement values (RTU and PMU) and consequently, a low weightage is assigned to low accuracy measurement (RTU and PMU) values. Furthermore, a plurality of weighted RTU measurements is generated using the first set of adaptive weights and the plurality of real-time RTU measurements. Similarly, a plurality of weighted PMU measurements is generated using the second set of adaptive weights and the plurality of real-time PMU measurements.

At step 208 of the method of the present disclosure the one or more hardware processors 104 obtains a hybrid measurement vector *zₘₑₐₛ* by combining the plurality of weighted RTU measurements *ẑ_{RTU}* and the weighted PMU measurements *z_{PMU}.* The hybrid measurement vector consisting of both the plurality of real-time PMU measurement and the plurality of real-time RTU measurements combined in a time synchronized manner, is expressed in terms of true system state as follows: ${z}_{meas} = f \left(v\right) + e$ (4) where ${z}_{meas} = {\left[{z}_{PMU} {z}_{RTU}\right]}^{T}$ (5), where state vector, *v* = ${\left[{v}_{real} {v}_{imag}\right]}^{T}$ (6), where f (.) is a function relating the hybrid
measurement vector with the state vector and e is an error vector of the PMU/RTU measurements. The true system state refers to actual voltage magnitudes and phase angles of the buses.

Now, at step 210 of the method of the present disclosure, the one or more hardware processors 104 iteratively estimate an initial state estimate of the power transmission network using the hybrid measurement vector by minimizing a weighted least squares (WLS) objective function of the form: $Min {\left[{z}_{meas}-f\left({v}^{k + 1}\right)\right]}^{T} W \left[{z}_{meas}-f\left({v}^{k + 1}\right)\right]$ (7) where ( *v* ) is a state vector,
*f*(*v*) is a nonlinear measurement function that maps the state vector ( *v* ) to the hybrid measurement vector *zₘₑₐₛ, W* is a unified weight matrix, and k is an iteration number. WLS is a standard optimization technique where weighted sum of squared measurements residuals are minimized to estimate the state of a system.

The unified weight matrix W is a diagonal matrix comprising the first set of adaptive weights *wᵣₜᵤ* and the second set of adaptive weights *wₚₘᵤ.* The first set of adaptive weights and the second set of adaptive weights provide weightage to significantly accurate measurements for improving the efficiency of state estimation.

Further, at step 212 of the method of the present disclosure, the one or more hardware processors 104 computes an updated state vector Δ*v^{k}* at iteration k, using the initial state estimate, wherein the iteration when the absolute value of the state vector change ∥Δ*v^{k}*∥ falls below the predetermined convergence threshold is represented as: $Δ {v}^{k} = {\left[{J}^{T}WJ\right]}^{- 1} {J}^{T} W Δ {z}_{meas}$ (8) where, *J* is a Jacobian Matrix and Δ*zₘₑₐₛ* is the difference between the hybrid measurement vector and the function *f*(*v^{k}*)*.* The Jacobian matrix *J* is computed by evaluating partial derivatives of the non-linear measurement function *f*(*v*) with respect to a real part and an imaginary part of the state vector *v*.

Now, at the step 214 of the method, the one or more hardware processors 104 are configured to generate a hybrid state estimate vector *v*^{*k+*1} from the updated state vector Δ*v^{k}* where, ${v}^{k + 1} = {v}^{k} + Δ {v}^{k}$ (9)

The hybrid state estimate vector obtained from the Gaussian process regression-based technique that not only supports non-linear system state evolutions but also allows us to track the expected changes in the RTU (SCADA) measurement. Thus, the hybrid state estimate vector provides an accurate and efficient state estimation of the power transmission network.

**Performance evaluation of the method 200 using a standard IEEE 38 Bus Test System**: In an example, the performance of the method 200 is evaluated using a test system. In the given example, a standard IEEE 39 bus transmission network is used as the test system. Test system parameters and network data are adopted from a standard dataset such as described by A. Pai et.al, "Energy function analysis for power system stability", Springer Science & Business Media, 1989. In the test system, the phasor measurement units (PMUs) are installed at 18 buses, namely at buses 1,2,3,4,6,7,9,10,11,13,14,16,17,19,22,23,25, and 29. Remote Terminal Units (RTUs) in the test system are deployed at the remaining 21 buses. Thus, a hybrid measurement configuration comprises a total of 18 PMUs and 21 RTUs. Consequently, a noise measurement associated with PMU measurements is assumed to be 1% whereas the noise measurements corresponding to RTU measurements is considered to be 3%.

Further, a true system state is obtained by executing a power flow on the test system to determine the true bus voltage values. Synthetic noisy measurements are generated by superimposing the noise measurement on a true system state, corresponding to each of the PMUs and the RTUs locations. The resulting values represent a noisy state measurement input for the estimation process. The bus voltage values observed at each buses in the test system after running the power flow are considered as the true system state. Now, the noise measurement of the PMU measurements and the noise measurements of the RTU measurements are added to the true system state at the respective buses and the aggregate is taken as a noisy state measurement.

In the aforementioned example, the measurement reporting frequency of the PMUs and the RTUs is assumed to follow a ratio of 25:1. Specifically, the PMU measurements are sampled twenty-five times more frequently than the RTU measurements. The time-lag between the latest of the PMU measurements and the RTU measurements sample used during forecasting varies from a minimum of 0.04 seconds to a maximum of 1.0 second. The time-lag distribution is demonstrated in FIG. 3.

In order to assess the statistical robustness and reliability of the method (200), a Monte Carlo simulation comprising approximately one thousand independent trials is executed. The performance results obtained through the Monte Carlo simulations are reported and discussed as follows:
In order to benchmark the method (200), comparative analysis is performed against two existing approaches. A first baseline, referred to as Method M3 (Naive Baseline), follows the methodology proposed by "Power generation, operation, andControl"[ https://tinyurl.com/4fmv6rtt]. The method M3 does not consider the time-lag between the RTU measurements and the PMU measurements. At each invocation of the state estimation procedure, the PMU measurements and the RTU measurements most recently available are used. The weighting of the PMU measurements and the RTU measurements are inversely proportional to a plurality of noise variances associated with the PMU measurements and the RTU measurements. A second baseline, referred to as Method M2 (Strong Baseline), follows the methodology proposed by "*A pragmatic approach to integrated hybrid state estimation in rectangular coordinates,*" [https://www.researchgate.net/publication/391812216_A_Pragmatic_Approach_to_In tegrated_Hybrid_State_Estimation_in_Rectangular_Coordinates], where the RTU measurements most recently available are incorporated in the state estimation with a dynamic weight based on the plurality of noise variances associated with the RTU measurements, the time lag between the PMU measurements and the RTU measurements, as well as a signal trend slope of the RTU measurements. Both the baselines are used solely for performance comparison and do not form part of the present disclosure.

### Performance metric:-

A standardized metric known as Total Vector Error (TVE) is employed in accordance with IEEE C37.118.2011 to evaluate estimation accuracy of the method 200. TVE is computed as: $TVE = \sqrt{\frac{{\left({v}_{real}^{true}-{v}_{real}^{est}\right)}^{2} + {\left({v}_{imag}^{true}-{v}_{imag}^{est}\right)}^{2}}{{\left({v}_{real}^{true}\right)}^{2} + {\left({v}_{imag}^{true}\right)}^{2}}}$ (10)

where, ${v}_{real}^{true}$ is the real part of the true state and ${v}_{imag}^{true}$ is the imaginary parts of the true system states, respectively. Similarly, ${v}_{real}^{est}$ and ${v}_{imag}^{est}$ are the real and imaginary parts of the state estimation, respectively. A time series power flow has been simulated for 5 minutes and the performance across all the time steps is averaged and presented.

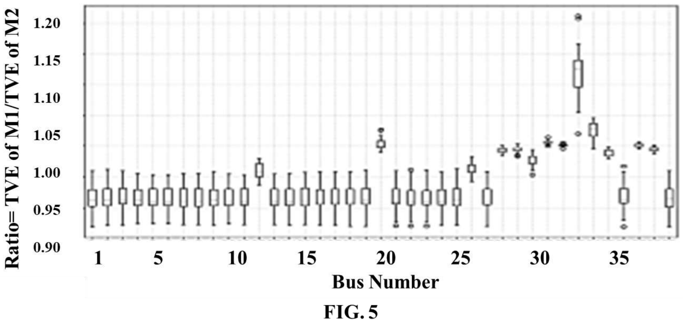

Now referring to FIG. 5, performance evaluation of the method 200 with respect to the first baseline and the second baseline are discussed. For ease of reference, the following terminologies are used: M1 refers to the method 200, M2 - refers to the strong baseline, and M3 - refers to the naive baseline. The results obtained from the test system are categorized and discussed under the following aspects:

Impact of Time-Lag: The method (M1) demonstrates improved estimation accuracy over both baselines M2 and M3 across varying time lags. As shown in FIG. 5, at the maximum observed time lag (1 second), method M1 yields a TVE reduction of approximately three percent (3%) compared to method M2. At the minimum time lag (0.04 seconds), the improvement increases to over five percent (5%). In contrast, when compared with method M3, the method M1 achieves a TVE reduction of approximately eleven percent (11%) at maximum lag and up to fourteen percent (14%) at minimum lag.

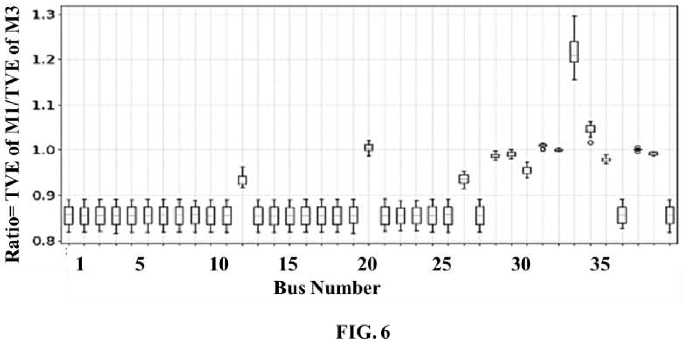

Impact Across Buses: FIG. 5 and FIG. 6 illustrate the variation in estimation accuracy improvement across all buses in the test system network. It is observed that the TVE reduction is non-uniform across different buses, potentially due to the interdependent nature of power flow equations wherein forecasting errors at one bus may affect the state estimates of other buses. Nevertheless, the TVE reduction reaches up to five percent (5%) and fourteen percent (14%) over baselines M2 and M3, respectively.

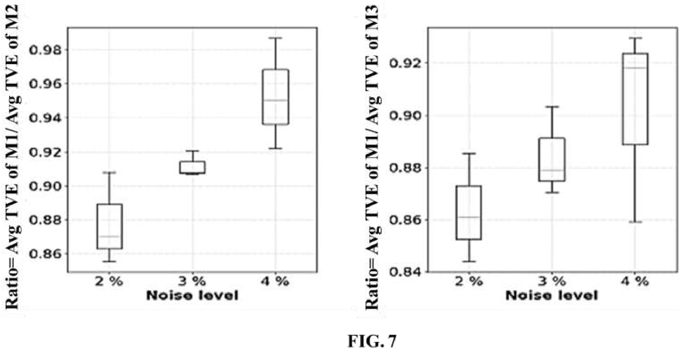

Impact of RTU Measurement Noise: FIG. 7 presents the performance variation of the method (200) with respect to different noise levels of the RTU measurements. The method M1 exhibits superior performance under lower noise levels, attributed to the enhanced ability of the embedded Gaussian Process Regression (GPR) model to track and learn underlying patterns in RTU signal trends, thereby yielding improved estimates and uncertainty quantification.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of hybrid state estimation in a power transmission network. Almost all of the conventional approaches does not model time lags between the RTU measurements and the PMU measurements. However, some of the existing approaches attempts address the challenge of the time lags using adaptive weighting based on a set of assumptions including linearized evolution of the state estimate and the RTU measurements does not change across different time instants. Thus, in the present disclosure, the method forecasts the RTU measurements in real-time with associated noise and uncertainties using Gaussian Process Regression (GPR) based forecasting. The method also constructs an adaptive weight matrix based on the noise and uncertainties associated with the RTU measurements and the PMU measurements , and perform hybrid state estimation using a modified weighted least square (WLS) approach. By leveraging the RTU measurements forecasted and the PMU measurements through a consistent and uncertainty-aware framework, the present disclosure achieves significantly improved hybrid state estimation accuracy and robustness in real-world, time-staggered measurement environments.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (200) for hybrid state estimation of a power transmission network, the method comprising:
receiving (202), via one or more hardware processors, a plurality of historical remote terminal unit (RTU) data at a first time instant *t_{R}* and a plurality of real-time phasor measurement unit (PMU) measurements at a second time instant *t_{P},* wherein *t_{P} > t_{R}*;
forecasting (204), via the one or more hardware processors, a plurality of real-time RTU measurements *ẑ_{RTU},* a plurality of RTU noise variances ${σ}_{rtu}^{2}$*,* and a plurality of RTU uncertainty variances ${σ}_{est}^{2}$*,* corresponding to the plurality of real-time RTU measurements at the second time instant *t_{P}*, using a Gaussian Process Regression (GPR) based on the plurality of historical RTU data;
computing (206), via the one or more hardware processors, a first set of adaptive weights *wᵣₜᵤ* for the plurality of real-time RTU measurements based on a function of the plurality of uncertainty variances ${σ}_{est}^{2}$ and the plurality of RTU noise variance ${σ}_{rtu}^{2}$ to generate a plurality of weighted RTU measurements, and a second set of adaptive weights *wₚₘᵤ* for the plurality of real-time PMU measurements based on a plurality of PMU noise variance ${σ}_{pmu}^{2}$ to generate a plurality of weighted PMU measurements;
obtaining (208), via the one or more hardware processors, a hybrid measurement vector *zₘₑₐₛ,* by combining the plurality of weighted RTU measurements and the plurality of weighted PMU measurements;
iteratively estimating (210), via the one or more hardware processors, an initial state estimate using the hybrid measurement vector by minimizing a weighted least squares (WLS) objective function of the form: $Min {\left[{z}_{meas}-f\left({v}^{k + 1}\right)\right]}^{T} W \left[{z}_{meas}-f\left({v}^{k + 1}\right)\right] ,$
where, ( *v* ) is a state vector, *f*(*v*) is a nonlinear measurement function that maps the state vector ( *v* ) to the hybrid measurement vector *zₘₑₐₛ,*
*W* is a unified weight matrix, and *k* is an iteration number;
computing (212), via the one or more hardware processors, an updated state vector Δ*v^{k}* at iteration k, using the initial state estimate, wherein the iteration when the absolute value of the state vector change ∥Δ*v^{k}*∥ falls below the predetermined convergence threshold is represented as: $Δ {v}^{k} = {\left[{J}^{T}WJ\right]}^{- 1} {J}^{T} W Δ {z}_{meas} ,$ where, *J* is a Jacobian Matrix, and Δ*zₘₑₐₛ* is difference between the hybrid measurement vector and the function *f*(*v^{k}*); and
generating (214), via the one or more hardware processors, a hybrid state estimate vector *v*^{*k+*1} from the updated state vector Δ*v^{k}.*

2. The processor implemented method as claimed in claim 1, wherein the hybrid measurement vector is used to initialize the state vector ( *v* ) in rectangular coordinates form and to set the predetermined convergence threshold.

3. The processor implemented method as claimed in claim 1, wherein the unified weight matrix *W* is a diagonal matrix comprising the first set of adaptive weights and the second set of adaptive weights.

4. The processor implemented method as claimed in claim 1, wherein, the first set of adaptive weights assigned to the plurality of real-time RTU measurement is computed as: ${w}_{rtu} = \frac{1}{{σ}_{rtu}^{2} + {σ}_{est}^{2}} ,$ and
the second set of adaptive weights assigned to the plurality of real-time PMU measurement is computed as: ${w}_{pmu} = \frac{1}{{σ}_{pmu}^{2}} .$

5. The processor implemented method as claimed in claim 1, wherein the Jacobian matrix *J* is computed by evaluating a plurality of partial derivatives of the non-linear measurement function *f*(*v*) with respect to a real part and an imaginary part of the state vector *v*.

6. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive a plurality of historical remote terminal unit (RTU) data at a first time instant *t_{R}* and a plurality of real-time phasor measurement unit (PMU) measurements at a second time instant *t_{P},* wherein *t_{P} > t_{R}*;
forecast a plurality of real-time RTU measurements *ẑ_{RTU},* a plurality of RTU noise variances ${σ}_{rtu}^{2}$ and a plurality of RTU uncertainty variances ${σ}_{est}^{2}$ corresponding to the plurality of real-time RTU measurements at the second time instant *t_{P}* using a Gaussian Process Regression (GPR) based on the plurality of historical RTU data;
compute a first set of adaptive weights *wᵣₜᵤ* for the plurality of real-time RTU measurements based on a function of the plurality of uncertainty variances ${σ}_{est}^{2}$ and the plurality of RTU noise variance ${σ}_{rtu}^{2}$ to generate a plurality of weighted RTU measurements, and a second set of adaptive weights *wₚₘᵤ* for the plurality of real-time PMU measurements based on a plurality of PMU noise variance ${σ}_{pmu}^{2}$ to generate a plurality of weighted PMU measurements;
obtain a hybrid measurement vector *zₘₑₐₛ,* by combining the plurality of RTU measurements and the plurality of weighted PMU measurements;
iteratively estimate an initial state estimate using the hybrid measurement vector by minimizing a weighted least squares (WLS) objective function of the form: $Min {\left[{z}_{meas}-f\left({v}^{k + 1}\right)\right]}^{T} W \left[{z}_{meas}-f\left({v}^{k + 1}\right)\right]$ where, (*v*) is a state vector, *f*(*v*) is a nonlinear measurement function that maps the state vector ( *v* ) to the hybrid measurement vector *zₘₑₐₛ,*
*W* is a unified weight matrix, and *k* is an iteration number;
compute an updated state vector Δ*v^{k}* at iteration k, using the initial state estimate, wherein the iteration when the absolute value of the state vector change ∥Δ*v^{k}*∥ falls below the predetermined convergence threshold is represented as: $Δ {v}^{k} = {\left[{J}^{T}WJ\right]}^{- 1} {J}^{T} W Δ {z}_{meas}$ where, *J* is a Jacobian Matrix and Δ*zₘₑₐₛ* is difference between the hybrid measurement vector and the function *f*(*v^{k}*); and
generate a hybrid state estimate vector *v*^{*k+*1} from the updated state vector Δ*v^{k}.*

7. The system as claimed in claim 6, wherein the hybrid measurement vector is used to initialize the state vector ( *v* ) in rectangular coordinates form and to set the predetermined convergence threshold.

8. The system as claimed in claim 6, wherein the unified weight matrix W is a diagonal matrix comprising the first set of adaptive weights and the second set of adaptive weights.

9. The system as claimed in claim 6, wherein the first set of adaptive weights assigned to the plurality of real-time RTU measurement is computed as: ${w}_{rtu} = \frac{1}{{σ}_{rtu}^{2} + {σ}_{est}^{2}} ;$ and
Wherein the second set of adaptive weights assigned to the plurality of real-time PMU measurement is computed as: ${w}_{pmu} = \frac{1}{{σ}_{pmu}^{2}}$

10. The system as claimed in claim 6, wherein the Jacobian matrix *J* is computed by evaluating partial derivatives of the non-linear measurement function *f*(*v*) with respect to a real part and an imaginary part of the state vector *v*.

11. One or more non-transitory machine-readable information storage mediums comprising one or more instructions which when executed by one or more hardware processors cause:
receiving a plurality of historical remote terminal unit (RTU) data at a first time instant *t_{R}* and a plurality of real-time phasor measurement unit (PMU) measurements at a second time instant *t_{P},* wherein *t_{P} > t_{R}*;
forecasting a plurality of real-time RTU measurements *ẑ_{RTU},* a plurality of RTU noise variances ${σ}_{rtu}^{2}$*,* and a plurality of RTU uncertainty variances ${σ}_{est}^{2}$*,* corresponding to the plurality of real-time RTU measurements at the second time instant *t_{P},* using a Gaussian Process Regression (GPR) based on the plurality of historical RTU data;
computing a first set of adaptive weights *wᵣₜᵤ* for the plurality of real-time RTU measurements based on a function of the plurality of uncertainty variances ${σ}_{est}^{2}$ and the plurality of RTU noise variance ${σ}_{rtu}^{2}$ to generate a plurality of weighted RTU measurements, and a second set of adaptive weights *wₚₘᵤ* for the plurality of real-time PMU measurements based on a plurality of PMU noise variance ${σ}_{pmu}^{2}$ to generate a plurality of weighted PMU measurements;
obtaining a hybrid measurement vector *zₘₑₐₛ,* by combining the plurality of weighted RTU measurements and the plurality of weighted PMU measurements;
iteratively estimating an initial state estimate using the hybrid measurement vector by minimizing a weighted least squares (WLS) objective function of the form: $Min {\left[{z}_{meas}-f\left({v}^{k + 1}\right)\right]}^{T} W \left[{z}_{meas}-f\left({v}^{k + 1}\right)\right] ,$
where, ( *v* ) is a state vector, *f*(*v*) is a nonlinear measurement function that maps the state vector ( *v* ) to the hybrid measurement vector *zₘₑₐₛ,*
*W* is a unified weight matrix, and *k* is an iteration number;
computing an updated state vector Δ*v^{k}* at iteration k, using the initial state estimate, wherein the iteration when the absolute value of the state vector change ∥Δ*v^{k}*∥ falls below the predetermined convergence threshold is represented as: $Δ {v}^{k} = {\left[{J}^{T}WJ\right]}^{- 1} {J}^{T} W Δ {z}_{meas} ,$ where, *J* is a Jacobian Matrix, and Δ*zₘₑₐₛ* is difference between the hybrid measurement vector and the function *f*(*v^{k}*); and
generating a hybrid state estimate vector *v*^{*k+*1} from the updated state vector Δ*v^{k}.*

12. The one or more non-transitory machine-readable information storage mediums as claimed in claim 11, wherein the hybrid measurement vector is used to initialize the state vector ( *v* ) in rectangular coordinates form and to set the predetermined convergence threshold.

13. The one or more non-transitory machine-readable information storage mediums as claimed in claim 11, wherein the unified weight matrix *W* is a diagonal matrix comprising the first set of adaptive weights and the second set of adaptive weights.

14. The one or more non-transitory machine-readable information storage mediums as claimed in claim 11, wherein the first set of adaptive weights assigned to the plurality of real-time RTU measurement is computed as: ${w}_{rtu} = \frac{1}{{σ}_{rtu}^{2} + {σ}_{est}^{2}} ;$ and
Wherein the second set of adaptive weights assigned to the plurality of real-time PMU measurement is computed as: ${w}_{pmu} = \frac{1}{{σ}_{pmu}^{2}}$

15. The one or more non-transitory machine-readable information storage mediums as claimed in claim 11, wherein the Jacobian matrix *J* is computed by evaluating partial derivatives of the non-linear measurement function *f*(*v*) with respect to a real part and an imaginary part of the state vector *v*.
